# EUROPEAN PATENT APPLICATION

(11) **EP 4 303 999 A1**
(43) Date of publication of application: **10.01.2024**
(21) Application number: 22208997.1
(22) Date of filing: 23.11.2022
(51) Int. Cl.: H01M 50/569, H01M 50/209, H01M 10/04, H01M 50/298

(54) **BATTERY DEVICE ASSEMBLING METHOD AND BATTERY DEVICE**

(30) Priority: 08.07.2022 CN 202210806331
(71) Applicant: CALB Co., Ltd., Changzhou City, Jiangsu Province (CN)
(72) Inventor: GU, Liangjie, Changzhou City (CN); GUAN, Junshan, Changzhou City (CN); YAN, Tinglu, Changzhou City (CN); ZHANG, Yongjie, Changzhou City (CN)
(74) Representative: Becker, Eberhard

(57) **Abstract**

A battery device assembling method includes the following steps. A plurality of batteries (21) are stacked in a first direction. A plurality of collection connectors (32) are electrically connected to the batteries (21) correspondingly. After the batteries (21) and the collection connectors (32) are placed together in a battery box (1), the collection connectors (32) are electrically connected to a collection structure (31), such that the collection structure (31) collects information of the batteries (21). A battery device is assembled through the battery device assembling method.

## Description

### BACKGROUND

### Technical Field

The disclosure relates to the technical field of batteries, and in particular, relates to a battery device assembling method and a battery device.

### Description of Related Art

In the related art, when a battery device is to be assembled, the batteries are generally put into the battery box first, and then the conductive member and the batteries are welded to implement functions such as electrical connection or detection. After the batteries are placed in the battery box, since the space between the batteries and the battery box is narrower and smaller, a sufficient space is not provided for connecting tools such as a welding torch. The problem of difficulty in welding occurs, thereby affecting the reliability of the connection between the batteries and the conductive member.

### SUMMARY

The disclosure provides a battery device assembling method and a battery device.

According to the first aspect of the disclosure, the disclosure provides a battery device assembling method, and the method includes the following steps.

A plurality of batteries are stacked in a first direction.

A plurality of collection connectors are electrically connected to the batteries correspondingly.

The batteries and the collection connectors are placed together in a battery box.

The collection connectors are electrically connected to a collection structure, such that the collection structure collects information of the batteries.

According to the second aspect of the disclosure, the disclosure provides a battery device that is assembled through the abovementioned battery device assembling method. The battery device includes a plurality of batteries, a low-voltage signal collection component, and a frame. The batteries are stacked in a first direction. The low-voltage signal collection component includes a collection structure and a plurality of collection connectors. One ends of the collection connectors are electrically connected to the batteries correspondingly, and the other ends of the collection connectors are electrically connected to the collection structure. The frame surrounds the batteries. A connection position of at least one of the collection connectors and the battery is lower than a top surface of the frame in the first direction.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view illustrating a battery device according to an exemplary embodiment.
FIG. 2 is a schematic partial enlarged view of FIG. 1.
FIG. 3 is a schematic structural view illustrating battery units in a battery accommodating compartment in the battery device according to an exemplary embodiment.
FIG. 4 is a schematic partial enlarged view of FIG. 3.
FIG. 5 is a flow chart of a battery device assembling method according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

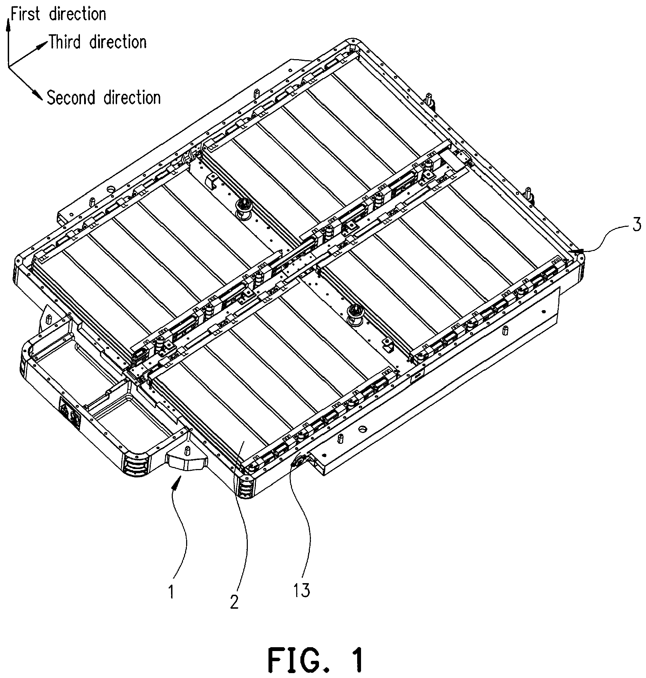

The embodiments of the disclosure further provide a battery device which is assembled through a battery device assembling method. As shown in FIG. 1 to FIG. 3, the battery device includes a plurality of batteries 21, a low-voltage signal collection component 3, and a frame 12. The batteries 21 are stacked and arranged in a first direction. The low-voltage signal collection component 3 includes a collection structure 31 and a plurality of collection connectors 32. One ends of the collection connectors 32 are electrically connected to the batteries correspondingly, and the other ends of the collection connectors 32 are electrically connected to the collection structure 31. The frame 12 surrounds the batteries 21, and the connection position of at least one of the collection connectors 32 and the battery 21 is lower than a top surface of the frame 12 in the first direction.

By arranging the plurality of batteries 21 to be stacked in the first direction, the energy density of the battery device is increased. By arranging the batteries 21 and the collection connectors 32 to be separate structures and arranging one ends of the collection connectors 32 to be electrically connected to the batteries 21 correspondingly, it is ensured that the batteries 21 and the collection connectors 32 are reliably connected. By arranging the other ends of the collection connectors 32 to be electrically connected to the collection structure 31 individually, the collection structure 31 is allowed to collect information of the batteries 21, such that performance indicators such as the power of the batteries 21 may be monitored. By arranging the batteries 21 to be surrounded by the frame 12, the side surfaces of the batteries 21 are protected by the frame 12. By arranging the connection position of at least one of the collection connectors 32 and the battery 21 to be lower than the top surface of the frame 12, the connection position is protected by the frame 12.

It should be noted that the collection connectors 32 may be electrically connected to terminals 213 of the batteries 21 directly, and the collection connectors 32 may also be electrically connected to the terminals 213 of the batteries 21 indirectly, for instance, the collection connectors 32 are electrically connected to the terminals 213 of the batteries 21 through a busbar.

It should be noted that the collection structure 31 may be a flexible wire harness or a printed circuit board (PCB).

Each battery includes a cell and an electrolyte and acts as the smallest unit capable of performing electrochemical reactions such as charging/discharging. The cell refers to a unit formed by winding or laminating a stacked part, and the stacked part includes a first electrode, a separator, and a second electrode. When the first electrode is a positive electrode, the second electrode is a negative electrode. The polarities of the first electrode and the second electrode may be interchanged.

In an embodiment, the battery 21 is a laminated battery, so that the battery 21 may not only be conveniently assembled but may also be processed to obtain a battery 21 with a longer length.

To be specific, the cell is a laminated cell. The cell has first electrode pieces that are stacked on each other, second electrode pieces whose electrical properties are opposite to the first electrode pieces, and diaphragm pieces disposed between the first electrode pieces and the second electrode pieces. Therefore, multiple pairs of the first electrode pieces and the second electrode pieces are stacked to form the laminated cell.

Optionally, the battery 21 may be a wound battery. That is, the first electrode pieces, the second electrode pieces whose electrical properties are opposite to the first electrode pieces, and the diaphragm pieces disposed between the first electrode pieces and the second electrode pieces are wound to obtain a wound cell.

It should be noted that, each battery 21 provided in this embodiment is a square battery. The height direction of each battery 21, that is, the stacking direction of the plurality of batteries 21, is defined as the first direction, the length direction of the battery 21 is defined as a second direction, and the width direction of the battery 21 is defined as a third direction. The first direction, the second direction, and the third direction are perpendicular among each other. The first direction, the second direction, and the third direction only represent the spatial directions and have no substantial meaning.

In an embodiment, each battery 21 has two first side surfaces 211 opposite to each other and four second side surfaces 212 connected end-to-end, the four second side surfaces 212 are disposed between the two first side surfaces 211, and the surface area of each of the first side surfaces 211 is greater than the surface area of each of the second side surfaces 212. Herein, the collection structure 31 is disposed on an upper one of the first side surfaces 211 of the uppermost one of the batteries 21 in the first direction. The batteries 21 stacked in the first direction form a battery unit 2, there are a plurality of battery units 2 in this embodiment, and adjacent two of the battery units 2 are connected through the collection structure 31.

The external shape of each battery 21 is similar to a rectangular structure. By arranging two first side surfaces 211 that are opposite to each other and four second side surfaces 212 that are connected end-to-end and disposed between the two first side surfaces 211, the two first side surfaces 211 and the four second side surfaces 212 form six surfaces of the rectangular structure. By arranging the surface area of each first side surface 211 to be greater than the surface area of each second side surface 212, the surface area of the first side surface 211 is relatively large, and the first side surface 211 may also be referred to as a larger surface.

By arranging the collection structure 31 to be disposed on the first side surfaces 211 of the batteries 21 located at the uppermost end in the first direction, the first side surfaces 211 of the batteries 21 provide a position for allowing the collection structure 31 to be placed, and the collection structure 31 is thus well supported. Since the surface area of the first side surface 211 is larger, the first side surface 211 provide a larger arrangement space of the collection structure 31. Further, the collection structure 31 is disposed on the uppermost batteries 21, and it is equivalent that the collection structure 31 is led out from the top, so even after the batteries 21 are put into the box, the cables of the collection structure 31 may still be conveniently arranged.

To be specific, two terminals 213 are respectively provided at both ends of each battery 21. By making the distance between the two terminals 213 relatively large and having the two terminals 213 led out from both ends, the interference of the terminals 213 during installation is prevented from occurring. The collection structure 31 is electrically connected to the terminals 213, and the collection structure 31 can collect various performance indicators of the batteries 21 through the terminals 213 to characterize the actual use condition of the batteries 21.

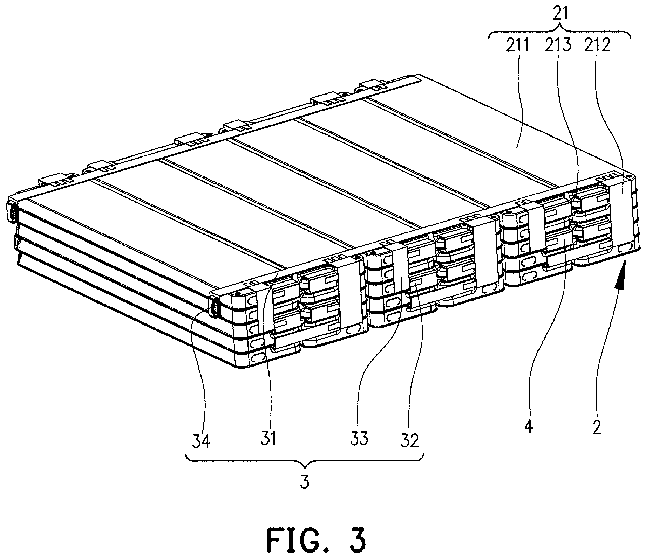

In an embodiment, as shown in FIG. 3 to FIG., 4, the two terminals 213 are respectively disposed on opposite sides of the first side surface 211, or the two terminals 213 are respectively disposed on opposite sides of the second side surface 212.

By arranging the terminals 213 on the first side surface 211, that is, the terminals 213 are disposed on the larger surface having a larger surface area, the first side surface 211 provides a relatively large arrangement position for the terminals 213, so that a large installation space is provided for the installation of the terminals 213 and other conductive elements, and the terminals 213 may thus be easily installed. Further, by respectively arranging the two terminals 213 on opposite sides of the first side surface 211, the distance between the two terminals 213 is relatively large, so that interference of the terminals 213 during installation is prevented from occurring.

By arranging the terminals 213 on the second side surface 212, the terminals 213 are arranged on the narrower surface with a relatively small surface area. In this embodiment, it is not limited whether the terminals 213 are arranged on a larger surface or a narrower surface, as long as the terminals 213 may be led out from both ends, it is within the protection scope of this embodiment.

It should be noted that the projections of the two terminals 213 on the reference plane may overlap, or the projections of the two terminals 213 on the reference plane may not overlap. Herein, the reference plane is parallel to the plane where the first direction and the third direction are located. In other words, the two terminals 213 may be disposed facing each other or may be disposed in an alternating manner. The positions of the two terminals 213 are not limited and may be adjusted according to actual production conditions.

In an embodiment, two collection structures 31 are respectively disposed on opposite sides of the first side surface 211, and the two terminals 213 of the same battery 21 are respectively connected to the two collection structures 31 correspondingly.

When multiple batteries 21 are connected in series or in parallel, by arranging the two terminals 213 of the same battery 21 to be respectively and correspondingly connected to the two collection structures 31, the two collection structures 31 can respectively collect data on both sides of the battery 21. In this way, independence is provided, and mutual influence and interference are prevented from occurring.

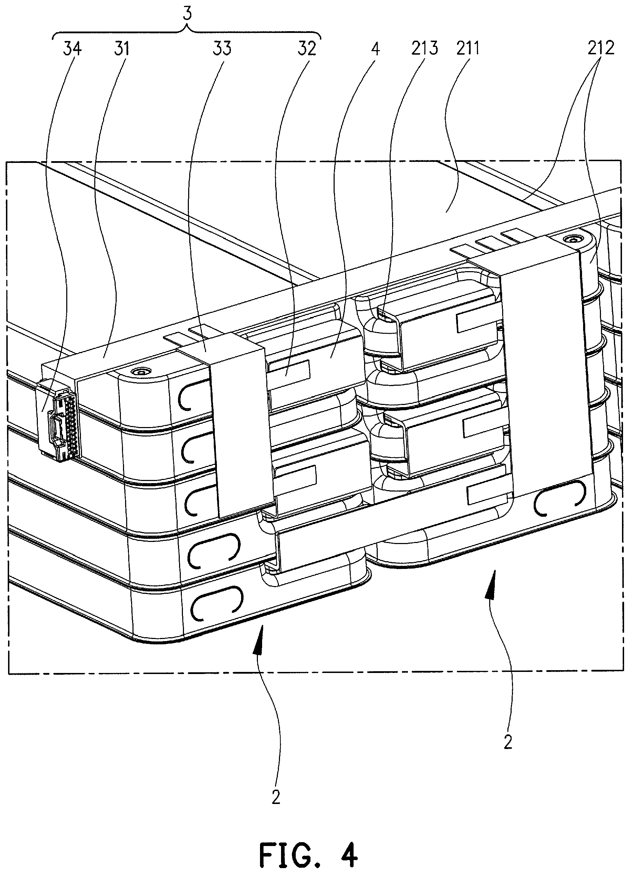

In an embodiment, as shown in FIG. 3 to FIG. 4, the low-voltage signal collection component 3 further includes a conductive connector 33, and the collection connectors 32 are electrically connected to the collection structure 31 through the conductive connector 33.

Since the batteries 21 are connected to the collection connectors 32 correspondingly, if the collection connectors 32 are directly connected to the collection structure 31, then, after the batteries 21 are put into a battery box 1, the collection connectors 32 need to be connected to the collection structure 31 in sequence. However, the space between the battery box 1 and the batteries 21 is relatively small, which makes it difficult to connect the collection connectors 32 to the collection structure 31. By electrically connecting the collection connectors 32 to the conductive connector 33, the conductive connector 33 integrates the collection connectors 32 and aggregates the collection connectors 32. The collection connectors 32 are electrically connected to the collection structure 31 through the conductive connector 33, and the conductive connector 33 serves as an intermediate connection. The collection structure 31 only needs to be connected to the conductive connector 33 acting as the main branch structure, and the collection structure 31 may be connected to the collection connectors 32. It thus can be seen that a simplified process is provided, and the production costs are reduced.

Further, since a certain distance is provided between the terminals 213 and the collection structure 31, by placing the collection connectors 32 between the terminals 213 and the collection structure 31, the collection connectors 32 serve as an intermediate connection to electrically connect the collection structure 31 and the terminals 213. It is thus ensured that the terminals 213 and the collection structure 31 are reliably connected.

In an embodiment, the terminals 213 of two adjacent batteries 21 are connected by the collection connectors 32, and the collection structure 31 is electrically connected to the collection connectors 32. Herein, the collection connectors 32 are specifically nickel pieces.

After the plurality of batteries 21 are stacked in the first direction, the electrical connection between the terminals 213 of the two adjacent batteries 21 is achieved through the collection connectors 32, so that the batteries 21 are electrically connected to one another. The collection structure 31 is electrically connected to the collection connectors 32, the process of collecting the signal of the batteries 21 by the collection structure 31 through the collection connectors 32 is thus completed. The collection connectors 32 are used for electrical connection with the collection structure 31 while achieving the electrical connection between the terminals 213 of the batteries 21, so the collection connectors 32 are multifunctional and exhibit better functionality.

It should be noted that, if the terminals 213 are disposed on the edge of the second side surface 212 or the first side surface 211, the collection connectors 32 are strip-shaped structures. The collection connectors 32 extend in the first direction, and the collection connectors 32 may be sequentially connected to the terminals 213 of the batteries 21 stacked in the first direction.

The terminals 213 of the batteries 21 may not protrude from the second side surface 212, but the terminals 213 are arranged on the edge of the first side surface 211, which is equivalent to the terminals 213 being recessed between two adjacent batteries 21. If the collection connectors 32 are connected to both the terminals 213 and the collection structure 31, the precise positioning of both ends of each collection connector 32 is relatively high. Further, the length of the collection connectors 32 in the first direction is relatively long, so the collection connectors 32 may easily break.

As such, the collection connectors 32 and the collection connector 33 provided in this embodiment together form a collection end, and the collection connectors 32 and the collection connector 33 are separate structures. The sizes of the collection connectors 32 and the conductive connector 33 are relatively small, so that errors generated during production and processing may be conveniently controlled. Further, the collection connectors 32 and the conductive connector 33 may be installed in sequence and thus are prevented from breaking due to the longer lengths. By arranging the collection connectors 32 to be electrically connected to the terminals 213 of the batteries 21, the collection connectors 32 may lead out the current of the terminals 213 of the batteries 21. The collection connectors 32 are electrically connected to the flexible branch through the conductive connector 33, so the conductive connector 33 functions as a transition between the collection connectors 32 and the collection structure 31.

In an embodiment, the number of the collection connectors 32 is plural, and one ends of the plurality of collection connectors 32 are respectively and electrically connected to the terminals 213 of the plurality of batteries 21, and the other ends are electrically connected to the conductive connector 33.

The number of collection connectors 32 corresponds to the number of batteries 21. By arranging one ends of the collection connectors 32 to be electrically connected to the terminals 213 of the batteries 21 correspondingly, each collection connector 32 correspond to one terminal 213 of a respective one of the batteries 21, the independence of the information collected from the terminals 213 of the batteries 21 is ensured, and signal interference is prevented from occurring. One terminal 213 of each battery 21 and its corresponding collection connector 32 form a branch. By electrically connecting the other ends of the collection connectors 32 to the conductive connector 33, this is equivalent to that the collection connector 33 integrates the plurality of branches and aggregates the electrical signals.

In an embodiment, the conductive connector 33 is connected to the collection structure 31 through a fixing structure. Through the use of the fixing structure, the fixing between the conductive connector 33 and the collection structure 31 is implemented, and the two are ensured to be reliably connected.

It can be understood that the fixing structure may be any one of a plug-in structure, an interference structure, and a welded structure, which represent different fixing methods. In this embodiment, the specific form of the fixing structure is not limited, and the fixing structure may be adjusted according to actual production needs.

It can be understood that an insulating layer is coated on the outside of the fixing structure. The insulating layer is used to isolate the conductive connector 33 from the collection structure 31 to ensure the insulating effect.

In an embodiment, the conductive connector 33 corresponding to the collection connectors 32 is an integrally-formed structure, or the conductive connector 33 corresponding to the collection connectors 32 is a split structure.

If the conductive connector 33 corresponding to the plurality of collection connectors 32 is a split structure, the number of the conductive connector 33 is also multiple. One end of each collection connector 32 is electrically connected to one terminal 213 of each battery 21 correspondingly, and the other end of each collection connector 32 is electrically connected to one of the conductive connectors 33 correspondingly. Herein, one end of each conductive connector 33 that is not connected to the collection connector 32 is electrically connected to the collection structure 31, which is equivalent to the implementation of signal aggregation at the position of the collection structure 31.

If the conductive connector 33 corresponding to the plurality of collection connectors 32 is an integrally-formed structure, the number of the conductive connector 33 is one. One end of each collection connector 32 is electrically connected to one terminal 213 of each battery 21 correspondingly, and the other end of each collection connector 32 is electrically connected to the same conductive connector 33 correspondingly. That is, plural collection connectors 32 share the same conductive connector 33, which is equivalent to the implementation of signal aggregation at the position of the conductive connector 33.

In an embodiment, the conductive connector 33 is any one of a PCB, flexible printed circuit (FPC), and flexible flat cable (FFC).

IF the conductive connector 33 is directly similar to a structure similar to a whole PCB, the PCB may also be referred to as a printed circuit board or a printed wiring board. The PCB may be used as a support for the collection connector 32 and as a carrier for the collection connector 32 and the collection structure 31 to be electrically connected to each other.

If the conductive connector 33 is an FPC or FFC, it is a structure in which a plurality of branch cables are combined into one main cable. To be specific, the FPC or FFC may be a wire, the wire includes a sheath and a cable, the cable is arranged in the sheath, and the sheath protects the cable. In the initial state, the length of the cable and the sheath may be considered to be the same. The two ends of the cable are respectively the main end and the branch end, and when electrical connection is required, the main end of the cable is electrically connected to the collection structure 31 directly, and the outer sheath of the cable branch is stripped off, so that the cable branch is exposed to the external environment, and at this time, each branch of the cable branch is in a dispersed state, so that each branch is electrically connected to each terminal 213 of each battery 21 correspondingly.

In an embodiment, the low-voltage signal collection component 3 further includes an output end 34, and the output end 34 is electrically connected to the collection structure 31. The output end 34 is used as the lead-out end of the collection structure, and the output end 34 may be connected to other electrical devices for monitoring index parameters, so that the signals of the batteries 21 may be transmitted.

It can be understood that the output end 34 may be disposed at a position directly opposite to one of the battery units 2, or the output end 34 may be disposed outside the battery units 2, that is, for one battery accommodating compartment 13, the output end 34 is disposed at the end portion of the battery accommodating compartment 13 in the third direction, so as to prevent the battery units 2 from interfering with the output end 34.

In an embodiment, the battery device further includes the battery box 1. The battery box 1 includes a bottom plate 11, and the batteries 21 are stacked and disposed on the bottom plate 11 in the first direction. Herein, the first direction is perpendicular to the bottom plate 11.

By stacking the batteries 21 on the bottom plate 11 in the first direction, the bottom plate 11 carries the batteries 21, and a good supporting effect is provided. The batteries 21 are disposed on the bottom plate 11 by stacking up and down in the first direction, so that the height space is effectively used, and the floor space is thus saved.

In an embodiment, the battery device is a battery module. The battery module includes the plurality of batteries 21, and the battery module may further include end plates and side plates. The end plates and the side plates are configured to secure the batteries 21. A buffer pad may be arranged between adjacent batteries 21, and the buffer pads may also be arranged between the end plates and the batteries 21.

In an embodiment, the battery device is a battery pack. By arranging the batteries 21 in the battery box 1, the battery box 1 is able to protect the batteries 21.

It should be noted that, when the number of batteries 21 is multiple, the multiple batteries 21 may be arranged in the stacking direction of the batteries 21 to form a group of batteries 21 and may then be placed in the battery box 1. The batteries 21 may be secured through the end plates and the side plates. When the batteries 21 are directly disposed in the battery box 1, that is, the batteries 21 are not required to be arranged into groups, the end plates and the side plates may then be removed.

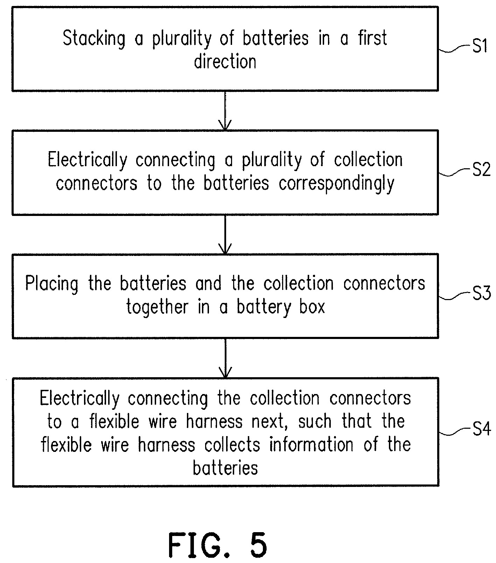

An embodiment of the disclosure provides a battery device assembling method. With reference to FIG. 5, the battery device assembling method includes the following steps. A plurality of batteries 21 are stacked in a first direction. A plurality of collection connectors 32 are electrically connected to the batteries 21 correspondingly. After the batteries 21 and the collection connectors 32 are placed together in a battery box 1, the collection connectors 32 are electrically connected to a collection structure 31, such that the collection structure 31 collects information of the batteries 21.

In the battery device assembling method provided by this embodiment, by arranging the plurality of batteries 21 to be stacked in the first direction, the energy density of the battery device is increased. If the batteries 21 and the collection connectors 32 are welded after the batteries 21 are placed in the battery box 1, the space between the batteries 21 and the battery box 1 is narrow and small, which cannot provide a sufficient space for connecting tools such as a welding torch, so that the problem of difficulty in welding occurs, thereby affecting the reliability of the connection between the batteries 21 and the collection connectors 32. By electrically connecting the plurality of collection connectors 32 to the plurality of batteries 21 correspondingly before the batteries 21 are placed into the battery box 1, the problem of not being able to provide installation space for the welding torch between the batteries 21 and the battery box 1 is solved. The batteries 21 and the collection connectors 32 may thus be reliably connected. The collection connectors 32 are electrically connected to the collection structure 31 individually after the batteries 21 and the collection connectors 32 are placed in the battery box 1 together. Since the collection connectors 32 have already been connected to the batteries 21 before being placed into the battery box 1, after the batteries 21 are placed into the battery box 1, only the collection connectors 32 need to be connected to the collection structure 31. In this way, it is convenient to carry out the overall process operation after the batteries 21 are placed into the battery box 1. By arranging the collection connectors 32 to be electrically connected to the collection structure 31 individually, the collection structure 31 is allowed to collect information of the batteries 21, so that performance indicators such as the power of the batteries 21 may be monitored.

Understandably, the connection position of at least one of the collection connectors 32 and the battery 21 is lower than the top surface of the frame 12 in the first direction. Herein, if it is not that the collection connectors 32 and the batteries 21 are electrically connected before being placed into the battery box 1, but the batteries 21 are electrically connected to the collection connectors 32 after the batteries 21 are placed into the battery box 1, the frame 12 may then interfere with the connection position of the collection connectors 32 and the batteries 21.

In an embodiment, the battery device assembling method further includes the following steps. The collection connectors 32 are electrically connected to a conductive connector 33 before the collection connectors 32 are electrically connected to the batteries 21 correspondingly, such that the collection connectors 32 are electrically connected to the collection structure 31 through the conductive connector 33.

Since the plurality of batteries 21 are connected to the plurality of collection connectors 32 correspondingly, if the collection connectors 32 are directly connected to the collection structure 31, then, after the batteries 21 are placed into the battery box 1, the plurality of collection connectors 32 need to be connected to the collection structure 31 in sequence. However, the space between the battery box 1 and the batteries 21 is relatively small, which makes it difficult to connect the plurality of collection connectors 32 to the collection structure 31. By electrically connecting the plurality of collection connectors 32 to the conductive connector 33, the conductive connector 33 integrates the plurality of collection connectors 32 and aggregates the collection connectors 32. The collection connectors 32 are electrically connected to the collection structure 31 through the conductive connector 33, and the conductive connector 33 serves as an intermediate connection. The collection structure 31 only needs to be connected to the conductive connector 33 acting as the main branch structure, and the collection structure 31 may be connected to the plurality of collection connectors 32, such that a simplified process is provided, and the production costs are reduced. Further, since the connection between the collection connectors 32 and the conductive connector 33 is performed before the batteries 21 are put into the battery box 1, herein, the connection between the collection connectors 32 and the conductive connector 33 is not limited by the space of the battery box 1, the operation is relatively easy. Further, the connection reliability between the collection connectors 32 and the conductive connector 33 is better.

In an embodiment, the conductive connector 33 extends in the first direction, and the collection structure 31 is disposed on the top portion of the batteries 21 in the first direction.

By arranging the conductive connector 33 to extend in the first direction, the conductive connector 33 is equivalent to being disposed on the side surfaces of the batteries 21. By arranging the collection structure 31 on the top portion of the batteries 21 in the first direction, that is, the collection structure 31 is equivalent to an ejection structure, it is convenient for the conductive connector 33 to be directly led to the top surface of the batteries 21 along the side surfaces of the batteries 21, thereby facilitating the connection between the conductive connector 33 and the collection structure 31. Further, if the collection structure 31 is disposed at the bottom portion and the middle portion of the batteries 21 in the first direction, the collection structure 31 may pass through a middle beam of the battery box 1 during installation. In this case, a through hole for allowing the collection structure 31 to pass therethrough needs to be provided on the middle beam in advance, so that the structural strength of the middle beam will be reduced while the production and processing costs are increased. By arranging the collection structure 31 on the top surface of the batteries 21 in the first direction, the installation of the collection structure 31 does not need to be affected by the middle beam in the battery box 1, and the middle beam is not required to be modified. In this way, the production costs are reduced, and the structural strength of the middle beam is also ensured.

In an embodiment, the conductive connector 33 is connected to the collection structure 31 through a fixing structure. Through the use of the fixing structure, the fixing between the conductive connector 33 and the collection structure 31 is implemented, and the two are ensured to be reliably connected.

It can be understood that the fixing structure may be any one of a plug-in structure, an interference structure, and a welded structure, which represent different fixing methods. In this embodiment, the specific form of the fixing structure is not limited, and the fixing structure may be adjusted according to actual production needs.

In an embodiment, the output end 34 is electrically connected to the collection structure 31 after the collection connectors 32 are electrically connected to the collection structure 31. Alternatively, the output end 34 is electrically connected to the collection structure 31 before the collection connectors 32 are electrically connected to the collection structure 31.

To be specific, after the collection connectors 32 are electrically connected to the collection structure 31, the free end of the collection structure 31 and the output end 34 may be welded. Since the collection structure 31 is located at the top portions of the batteries 21 in the first direction, the connection between the collection structure 31 and the output terminal 34 is not affected.

To be specific, the output end 34 may be electrically connected to the collection structure 31 before the collection connectors 32 are electrically connected to the collection structure 31. When the collection structure 31 is connected to the collecting connectors 32, it is equivalent that the collection structure 31 has its own output end 34, and the difficulty of connecting the collection structure 31 and the output end 34 is reduced.

In an embodiment, the batteries 21 are stacked in the first direction to form the battery units 2. After the battery units 2 are placed in the battery box 1, the collection structure 31 is electrically connected to the collection connectors 32 corresponding to the battery units 2.

If the number of the battery unit 2 is one, the collection structure 31 is used as the lead-out end of the battery unit 2 to collect the information of each battery 21 in the entire battery unit 2. If the number of battery units 2 is multiple, the multiple battery units 2 are arranged according to a certain rule. By electrically connecting the collection structure 31 to the collection connectors 32 corresponding to the battery units 2, the connection of the multiple battery units 2 may be achieved by using one collection structure 31. In this case, it is equivalent that the battery units 2 share the same collection structure 31, and the collection structure 31 is an integral structure. In this way, the time required for interconnecting the collection structure 31 of a multi-segment structure is saved, and the assembly costs of the battery device are saved.

If there are more than one battery units 2, two adjacent battery units 2 are connected by the collection structure 31, and the collection structure 31 bridges two adjacent battery units 2. In this way, the collection structure 31 may be electrically connected to the battery units 2 correspondingly and collects the signals of the batteries 21 of the battery units 2, so the function of the collection structure 31 is relatively strong.

It can be understood that, if the battery units 2 are arranged in sequence in the third direction, the collection structure 31 extends in the third direction. If the battery units 2 are arranged in sequence in the second direction, the collection structure 31 extends in the second direction.

It can be understood that the collection structure 31 may be a split structure. The plurality of collection structures 31 are correspondingly connected to the battery units 2, and two adjacent collection structures 31 are electrically connected to each other. The collection structure 31 may also be an integrally-formed structure. One collection structure 31 is electrically connected to plural battery units 2 correspondingly, that is, plural battery units 2 share the same collection structure 31.

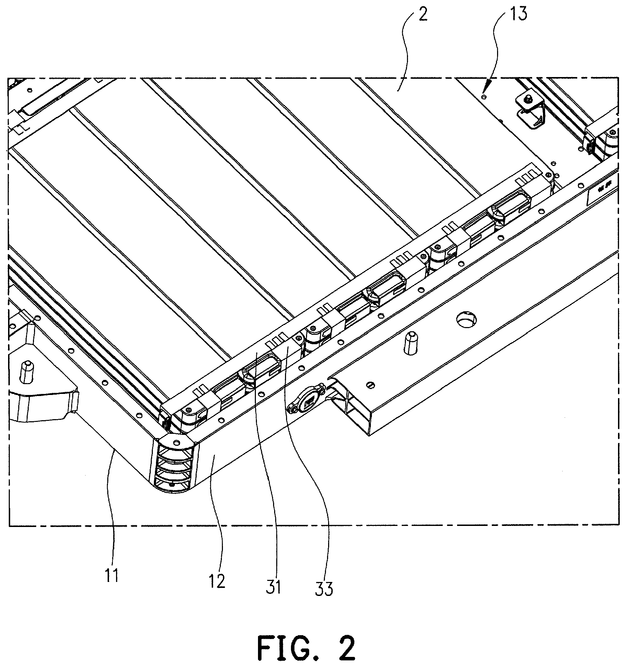

It should be noted that the battery box 1 of the battery device is provided with the frame 12 and a partition beam (as shown in FIG. 1 and FIG. 2). The frame 12 is arranged on the bottom plate 11, and the frame 12 is arranged around the battery units 2 to protect the side surfaces. The partition beam is arranged on the bottom plate 11 and inside the frame 12. The partition beam divides the compartment of the battery box 1 into the plurality of battery accommodating compartments 13, and each battery accommodating compartment 13 is used for accommodating the battery units 2. The collection structure 31 corresponding to each battery accommodating compartment 13 is an integrally-formed structure, and the collection structures 31 corresponding to different battery accommodating compartments 13 are split structures.

It can be understood that the widths of the conductive connectors 33 corresponding to different battery units 2 in the third direction may be the same or may be different. If the number of the conductive connectors 33 electrically connected to the collection connectors 32 correspondingly is relatively small, the width of the conductive connectors 33 in the third direction is relatively small. If the number of the conductive connectors 33 electrically connected to the collection connectors 32 correspondingly is relatively large, the width of the conductive connectors 33 in the third direction is relatively large.

It can be understood that, for each battery unit 2, in the first direction, after the connecting pieces of the batteries 21 are connected to the side surfaces of the batteries 21, the connecting pieces are connected to the top portion of the battery unit 2 through the collection connector 32. On the top portion of the battery unit 2, the collection structure 31 is then used to connect the plurality of battery units 2, and the series collection is thus achieved.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery device assembling method, comprising the following steps:
stacking a plurality of batteries (21) in a first direction;
electrically connecting a plurality of collection connectors (32) to the batteries (21) correspondingly;
placing the batteries (21) and the collection connectors (32) together in a battery box (1); and
electrically connecting the collection connectors (32) to a collection structure (31), such that the collection structure (31) collects information of the batteries (21).

2. The battery device assembling method according to claim 1, wherein before the collection connectors (32) are electrically connected to the batteries (21) correspondingly, the collection connectors (32) are electrically connected to a conductive connector (33), such that the collection connectors (32) are electrically connected to the collection structure (31) through the conductive connector (33).

3. The battery device assembling method according to claim 2, wherein the conductive connector (33) extends in the first direction, and the collection structure (31) is disposed on a top portion of the batteries (21) in the first direction.

4. The battery device assembling method according to claim 3, wherein the conductive connector (33) is connected to the collection structure (31) through a fixing structure.

5. The battery device assembling method according to claim 1, wherein after the collection connectors (32) are electrically connected to the collection structure (31), an output end (34) is electrically connected to the collection structure (31), or
before the collection connectors (32) are electrically connected to the collection structure (31), the output end (34) is electrically connected to the collection structure (31).

6. The battery device assembling method according to any one of claims 1-5, wherein the batteries (21) are stacked in the first direction to form a battery unit (2), and after a plurality of the battery units (2) are placed in the battery box (1), the collection structure (31) is electrically connected to the collection connectors (32) corresponding to the battery units (2).

7. A battery device, assembled through the battery device assembling method according to any one of claims 1-6, the battery device comprising:
a plurality of batteries (21), stacked in a first direction;
a low-voltage signal collection component (3), comprising a collection structure (31) and a plurality of collection connectors (32), wherein one ends of the collection connectors (32) are electrically connected to the batteries (21) correspondingly, and the other ends of the collection connectors (32) are electrically connected to the collection structure (31); and
a frame, surrounding the batteries (21), wherein a connection position of at least one of the collection connectors (32) and one of the batteries (21) is lower than a top surface of the frame in the first direction.

8. The battery device according to claim 7, wherein the low-voltage signal collection component further comprises a conductive connector (33), and the collection connectors (32) are electrically connected to the collection structure (31) through the conductive connector (33).

9. The battery device according to claim 8, wherein the conductive connector (33) is connected to the collection structure (31) through a fixing structure.

10. The battery device according to claim 9, wherein the fixing structure is any one of a plug-in structure, an interference structure, and a welded structure.

11. The battery device according to claim 8, wherein the conductive connector (33) corresponding to the collection connectors (32) is an integrally-formed structure, or the conductive connector (33) corresponding to the collection connectors (32) is a split structure.

12. The battery device according to claim 7, wherein each of the batteries (21) has two first side surfaces (211) opposite to each other and four second side surfaces (212) connected end-to-end, the four second side surfaces (212) are disposed between the two first side surfaces (211), and a surface area of each of the first side surfaces (211) is greater than a surface area of each of the second side surfaces (212),
wherein the collection structure (31) is disposed on an upper one of the first side surfaces (211) of an uppermost one of the batteries (21) in the first direction, the batteries (21) stacked in the first direction form a battery unit (2), a plurality of the battery unit (2) are provided, and adjacent two of the battery units (2) are connected through the collection structure (31).

13. The battery device according to any one of claims 7-12, wherein the low-voltage signal collection component further comprises an output end (34), and the output end (34) is electrically connected to the collection structure (31).

14. The battery device according to any one of claims 7-12, further comprising a battery box (1), wherein the battery box (1) comprises a bottom plate, and the batteries (21) are stacked and disposed on the bottom plate in the first direction,
wherein the first direction is perpendicular to the bottom plate.

15. The battery device according to any one of claims 7-12, wherein the collection structure (31) is a flexible wire harness or a printed circuit board (PCB).

16. The battery device according to claim 10, wherein an insulating layer is coated on an outside of the fixing structure.
